# EUROPÄISCHE PATENTANMELDUNG

(11) **EP 3 089 097 A1**
(43) Veröffentlichungstag der Anmeldung: **02.11.2016**
(21) Anmeldenummer: 15165337.5
(22) Anmeldetag: 28.04.2015
(51) Int. Cl.: G06Q 30/06

(54) **VERFAHREN ZUM ERZEUGEN VON PRIORITÄTSDATEN FÜR PRODUKTE**

(71) Anmelder: Omikron Data Quality GmbH, 75172 Pforzheim (DE)
(72) Erfinder: Die Erfindernennung liegt noch nicht vor
(74) Vertreter: Reitstötter Kinzebach

(57) **Zusammenfassung**

Die vorliegende Erfindung betrifft ein Verfahren zum Erzeugen von Prioritätsdaten für Produkte (P-1 bis P-n), zu denen Informationen ausgebbar sind. Bei dem Verfahren werden zu einem ersten Zeitpunkt (t1) Daten zu zumindest einem Produkt (P-1 bis P-n) gespeichert, mit dem ein definierter Nutzer (N-1) oder ein definiertes Nutzergerät (3-1) interagiert hat, und zumindest einer Teilmenge der Produkte (P-1 bis P-n) werden in Abhängigkeit von den gespeicherten Daten Prioritätsdaten für eine Ausgabe von Informationen an den definierten Nutzer (N-1) oder an das definierte Nutzergerät (3-1) zu den Produkten (P-1 bis P-n) zugeordnet. Zu einem zweiten Zeitpunkt (t2) wird eine Anfrage für eine Ausgabe von Informationen zu den Produkten (P-1 bis P-n) durch den definierten Nutzer (N-1) oder das definierte Nutzergerät (3-1) erfasst und es erfolgt die Ausgabe von Informationen zu den Produkten (P-1 bis P-n) auf die Anfrage in Abhängigkeit von den gespeicherten Prioritätsdaten. Dabei werden zumindest in einem Teilzeitintervall zwischen dem ersten (t1) und zweiten Zeitpunkt (t2) Merkmale von Produktinteraktionen erfasst, die bei einer Interaktion durch einen anderen Nutzer (N-2 bis N-m) oder ein anderes Nutzergerät (3-2 bis 3-m) des anderen Nutzers (N-2 bis N-m) mit den Produkten (P-1 bis P-n) der ersten Teilmenge der Produkte (P-1 bis P-n) generiert wurden. Ferner werden die gespeicherten Prioritätsdaten der ersten Teilmenge der Produkte (P-1 bis P-n) in Abhängigkeit von den jeweiligen erfassten Merkmalen der Produktinteraktionen verändert. Die Erfindung betrifft ferner ein Verfahren zum Betreiben einer Webseite für den E-Commerce und ein Computerprogrammprodukt mit Programmcode zur Durchführung des erfindungsgemäßen Verfahrens.

## Beschreibung

Die vorliegende Erfindung betrifft ein Verfahren zum Erzeugen von Prioritätsdaten für Produkte, zu denen Informationen ausgebbar sind. Bei dem Verfahren werden zu einem ersten Zeitpunkt Daten zu zumindest einem Produkt gespeichert, mit dem ein definierter Nutzer oder ein definiertes Nutzergerät interagiert hat. Zumindest einer ersten Teilmenge der Produkte werden in Abhängigkeit von den gespeicherten Daten Prioritätsdaten für eine Ausgabe von Informationen an den definierten Nutzer oder an das definierte Nutzergerät zu den Produkten zugeordnet. Zu einem zweiten Zeitpunkt wird eine Anfrage für eine Ausgabe von Informationen zu den Produkten durch den definierten Nutzer oder das definierte Nutzergerät erfasst. Die Ausgabe von Informationen zu den Produkten auf die Anfrage erfolgt dann in Abhängigkeit von den gespeicherten Prioritätsdaten. Das Verfahren wird insbesondere rechnergestützt oder computerimplementiert ausgeführt. Die Erfindung betrifft des Weiteren ein Verfahren zum Betreiben einer Webseite für den E-Commerce, bei dem dieses Verfahren zum Erzeugen von Prioritätsdaten für zumindest eine erste Teilmenge der Produkte eingesetzt wird, sowie ein Computerprogrammprodukt mit Programmcode zur Durchführung des erfindungsgemäßen Verfahrens.

Im E-Commerce werden eine Vielzahl von Produkten mittels einer Webseite angeboten. Ein Nutzer, der die Webseite aufruft, kann auf der Webseite nicht nur nach diesen Produkten suchen und Informationen zu den Produkten erhalten, sondern diese Produkte auch mittels der Webseite kaufen. Um dem Nutzer die Suche nach Produkten so komfortabel und einfach wie möglich zu gestalten, werden Daten des Nutzers bei einem Aufruf der Webseite gespeichert. Diese Nutzerdaten werden bei einem erneuten Aufruf der Webseite durch diesen Nutzer verwendet, um die Informationsdarstellung und die Suche des Nutzers nach bestimmten Produkten den Bedürfnissen des jeweiligen Nutzers anzupassen. Beispielsweise werden die zuletzt betrachteten und dann vom Nutzer jedoch nicht gekauften Produkte gespeichert. Wenn der Nutzer dann die Webseite erneut aufruft, werden ihm auf der Startseite diese zuletzt betrachteten Produkte angezeigt, um die Wahrscheinlichkeit zu erhöhen, dass er diese Produkte beim erneuten Aufruf der Webseite kauft.

Es hat sich herausgestellt, dass dieses Verfahren zur Darstellung von Produktinformationen gute Ergebnisse bei E-Commerce-Webseiten liefert, die von den Nutzern üblicherweise sehr häufig aufgerufen werden. Die dem Nutzer erneut präsentierten Produkte werden von diesem Nutzer häufiger gekauft als andere Produkte. Bei E-Commerce-Webseiten, die üblicherweise von einem Nutzer nicht so häufig besucht werden, hat sich jedoch herausgestellt, dass dieses Verfahren nicht dieselben vorteilhaften Ergebnisse liefert.

Die Ausgabe von Informationen über eine E-Commerce-Webseite erfolgt allgemein mittels Prioritätsdaten, die den Produkten zugeordnet sind. Ist der Wert der Prioritätsdaten für ein bestimmtes Produkt hoch, werden Informationen zu diesem Produkt auf der Startseite oder bei einer Suche häufiger, hervorgehobener oder weiter oben in einer Liste angezeigt als ein Produkt mit einem niedrigeren Wert der zugehörigen Prioritätsdaten. Die Prioritätsdaten sollten daher so erzeugt werden, dass sie die Relevanz des zugehörigen Produkts für einen spezifischen Clientcomputer bzw. einen bestimmten Nutzer so gut wie möglich widerspiegeln.

Der vorliegenden Erfindung liegt daher das technische Problem zugrunde, ein Verfahren zum Erzeugen von Prioritätsdaten für Produkte der eingangs genannten Art anzugeben, welches die Prioritätsdaten so erzeugt, dass sie die Relevanz der zugeordneten Produkte für einen bestimmten Clientcomputer bzw. einen definierten Nutzer so genau wie möglich abbilden.

Erfindungsgemäß wird dieses technische Problem durch ein Verfahren mit den Merkmalen des Anspruchs 1 gelöst. Vorteilhafte Ausgestaltungen und Weiterbildungen ergeben sich aus den abhängigen Ansprüchen.

Das erfindungsgemäße Verfahren ist somit dadurch gekennzeichnet, dass zumindest in einem Teilzeitintervall zwischen dem ersten und zweiten Zeitpunkt Merkmale von Produktinteraktionen erfasst werden, die bei einer Interaktion durch einen anderen Nutzer oder ein anderes Nutzergerät des anderen Nutzers mit den Produkten der ersten Teilmenge der Produkte generiert wurden. Die gespeicherten Prioritätsdaten der ersten Teilmenge der Produkte werden dann in Abhängigkeit von den jeweiligen erfassten Merkmalen der Produktinteraktionen verändert.

Der Begriff "Produkte" im Sinne der Erfindung bezeichnet insbesondere Objekte, die dem Nutzer von einem Anbieter angeboten werden, insbesondere Waren und Dienstleistungen. Dies können etwa physische Objekte sein oder auch beispielsweise Dateien, etwa Musik- oder Videodateien, Texte und Bilder oder Webseiten. Unter einem Produkt kann in dieser Schrift des Weiteren auch eine Produktkategorie oder eine Gruppe von Einzelprodukten mit bestimmten Eigenschaften verstanden werden.

Erfindungsgemäß wird zunächst eine Interaktion des definierten Nutzers mit zumindest einem Produkt erfasst. Ausgehend davon werden einer ersten Teilmenge der Produkte Prioritätsdaten zugeordnet. Diese erste Teilmenge kann dabei zum Beispiel lediglich das Produkt umfassen, mit dem der Nutzer interagiert hat. Sie kann ferner etwa miteinander verwandte Produkte umfassen, etwa in der gleichen Kategorie. Ferner kann die Teilmenge auch identisch mit der Gesamtmenge der Produkte sein. Insbesondere hat die Interaktion des Nutzers mit einem Produkt Einfluss auf die Prioritätsdaten anderer Produkte bzw. einer definierten Menge von Produkten.

Bei dem erfindungsgemäßen Verfahren hängen somit die Prioritätsdaten eines Produkts auch von Merkmalen der Produktinteraktionen ab, die bei Interaktionen mit den Produkten durch einen anderen Nutzer im Zeitintervall zwischen einer Produktinteraktion und einer Anfrage für eine Ausgabe von Informationen durch den definierten Benutzer generiert wurden. Auf diese Weise hat das Nutzerverhalten eines anderen Nutzers Einfluss auf die Priorität eines Produkts für den definierten Nutzer, es werden also sowohl Produktinteraktionen durch den definierten Nutzer, als auch durch andere Nutzer berücksichtigt. Insbesondere wird dabei das zu- oder abnehmende Interesse anderer Nutzer an den Produkten im Zeitverlauf berücksichtigt. Die Prioritätsdaten und die von diesen abhängige Ausgabe von Informationen zu den Produkten werden entsprechend angepasst. Hierdurch wird es ermöglicht, dass die Relevanz eines Produkts für den definierten Nutzer besser ermittelt wird, so dass dem definierten Nutzer für ihn relevantere Produkte bei der Informationsausgabe präsentiert werden können.

Die Daten, die bei dem erfindungsgemäßen Verfahren zu Produkten gespeichert werden, mit denen eine Interaktion stattgefunden hat, umfassen insbesondere Informationen darüber, welcher Nutzer bzw. welches Nutzergerät mit diesem Produkt interagiert hat. Die Prioritätsdaten werden für die spätere Informationsausgabe an denselben Nutzer bzw. dasselbe Nutzergerät gespeichert. Sie werden erfindungsgemäß jedoch durch das Nutzerverhalten anderer Nutzer beeinflusst.

Bei einer Weiterbildung des erfindungsgemäßen Verfahrens wird ferner für das zumindest eine Produkt ein Ähnlichkeitsmaß zu den Produkten bestimmt. Die Prioritätsdaten der ersten Teilmenge der Produkte werden dann ferner in Abhängigkeit vom Ähnlichkeitsmaß der Produkte, mit denen ein Nutzer oder ein Nutzergerät interagiert hat, erzeugt oder verändert. Dabei ist der Nutzer der definierte Nutzer und/oder der andere Nutzer, ferner ist das Nutzergerät das Nutzergerät des definierten Nutzers und/oder das Nutzergerät des anderen Nutzers.

So kann in vorteilhafter Weise der Einfluss einer Interaktion mit einem Produkt auf die Prioritätsdaten anderer Produkte von einer Gewichtung entsprechend ihrer Ähnlichkeit abhängen. Insbesondere können auf diese Weise "verwandte" Produkte, die eine stärkere Ähnlichkeit aufweisen, stärker beeinflusst werden als weniger ähnliche Produkte. Die Ähnlichkeit der Produkte kann beispielsweise aus der Zugehörigkeit zur gleichen Kategorie oder durch gemeinsame Schlagworte bestimmt werden. Ferner können die Produkte gleiche oder ähnliche Eigenschaften haben, etwa die Farbe oder den Preis. Zudem kann die Ähnlichkeit der Produkte zueinander auch durch weitere, an sich bekannte Verfahren bestimmt werden, etwa einen Empfehlungsdienst ("recommendation engine") oder ein neuronales Netz, wobei in diesem Fall die Gemeinsamkeiten nicht auf eindeutige Eigenschaften der Produkte zurückführbar sein müssen.

Gemäß einer Ausgestaltung des erfindungsgemäßen Verfahrens werden zu dem ersten Zeitpunkt Daten zu Produkten gespeichert, zu denen bei der Interaktion Informationen bei einem Aufruf einer Webseite durch einen Clientcomputer des definierten Nutzers oder von dem definierten Nutzer ausgegeben worden sind. Der ersten Teilmenge der Produkte werden in Abhängigkeit von den gespeicherten Daten die Prioritätsdaten für einen erneuten Aufruf der Webseite durch diesen Clientcomputer oder von diesem Nutzer zugeordnet. Zu dem zweiten Zeitpunkt ist die Anfrage für die Informationsausgabe ein erneuter Aufruf der Webseite durch diesen Clientcomputer oder von diesem Nutzer. Die Ausgabe von Informationen zu den Produkten bei dem erneuten Aufruf der Webseite erfolgt dann in Abhängigkeit von den gespeicherten Prioritätsdaten. Der erste Zeitpunkt ist bei dieser Ausgestaltung der Aufruf und der zweite Zeitpunkt der erneute Aufruf der Webseite durch den Clientcomputer oder von dem definierten Nutzer.

Vorteilhafterweise werden bei dieser Ausgestaltung die Prioritätsdaten für den späteren Aufruf der Webseite durch einen definierten Clientcomputer bzw. von einem definierten Nutzer durch das Nutzerverhalten beim Aufruf der Webseite durch andere Nutzer oder ein anderes Nutzergerät des anderen Nutzers oder eine andere Interaktion durch einen anderen Nutzer oder ein anderes Nutzergerät des anderen Nutzers mit den Produkten beeinflusst. Die Produktinteraktionen des definierten Nutzers finden also virtuell auf der Webseite statt, die des anderen Nutzers auch über eine Webseite oder auch auf andere Weise, wie es später erläutert wird. Als Aufruf oder Besuch der Webseite werden dabei im weiteren Sinne computer-implementierte Verfahren zur Anforderung von Informationen und deren Ausgabe für einen Benutzer verstanden. Das Verfahren ist also nicht auf die Ausgabe einer Webseite in einem Browser beschränkt, sondern umfasst auch die Ausgabe von Daten mittels einer geeigneten Anwendung, etwa auf einem Mobiltelefon oder mobilen Computer, oder beispielsweise durch ein Terminal in einem Ladengeschäft sowie das Zusenden einer E-Mail.

Die Veränderung der Prioritätsdaten durch das Nutzerverhalten der anderen Nutzer führt vorteilhafterweise dazu, dass dem definierten Nutzer Informationen zu Produkten ausgegeben werden können, die für ihn so relevant wie möglich sind. Des Weiteren können Informationen darüber gespeichert werden, bei welcher Routine während des Besuchs der Webseite Informationen zu dem Produkt ausgegeben wurden. Beispielsweise kann gespeichert werden, dass der Nutzer das Produkt in einen elektronischen Warenkorb gelegt hat, das Produkt jedoch dann doch nicht gekauft hat. Gleichermaßen kann gespeichert werden, wenn der Nutzer das Produkt auf einer elektronischen Merkliste vermerkt hat. Schließlich kann gespeichert werden, ob der Nutzer auf der Webseite weitere Informationen zu dem Produkt eingeholt hat, etwa durch das Aufrufen einer detaillierten Produktbeschreibung. Auch diese Daten können den Wert der Prioritätsdaten zu dem zugeordneten Produkt, d.h. die Priorität des Produkts für den entsprechenden Nutzer bzw. den zugeordneten Clientcomputer beeinflussen.

Gemäß einer Ausbildung wird bei den Produktinteraktionen eine räumliche Nähe zwischen den Produkten und dem Nutzer und/oder dem Nutzergerät erfasst. So können vorteilhafterweise physische Produktinteraktionen erfasst werden, etwa in einem Ladengeschäft oder Ausstellungsräumen. Beispielsweise kann die Position des Nutzers erfasst werden, etwa mittels einer Kamera oder eines Trackingsystems, das den Nutzer anhand seines Nutzergerätes lokalisiert. Dabei kann der Nutzer der definierte Nutzer und/oder der andere Nutzer sein, ferner kann das Nutzergerät das Nutzergerät des definierten Nutzers und/oder das Nutzergerät des anderen Nutzers sein. Auf diese Weise kann etwa festgestellt werden, ob sich der Nutzer in der Nähe des Produkts, beispielsweise vor einem bestimmten Regal, befindet.

Merkmale der Produktinteraktion über die bloße Detektion der räumlichen Nähe hinaus können ebenfalls erfasst werden, etwa wenn der Nutzer ein Produkt aus einem Regal nimmt oder es in einen Einkaufwagen legt. Zudem kann etwa ein Erfassungssystem detektieren, dass der Nutzer ein Produkt gezielt betrachtet. Ferner kann indirekt auf die räumliche Nähe und eine physische Interaktion geschlossen werden, etwa wenn der Nutzer ein Produkt an einer Kasseneinrichtung bezahlt. Ferner kann erfasst werden, wenn ein Nutzer ein Produkt kauft und später zurückgibt oder umtauscht.

Dabei kann eine Produktinteraktion durch den definierten Nutzer oder einen anderen Nutzer, bzw. die entsprechenden Nutzergeräte, erfasst werden. Beispielsweise können auch Produktinteraktionen durch nicht identifizierte Nutzer erfasst werden, beispielsweise die Häufigkeit eines bestimmten Typs von Interaktion, etwa wie oft das Produkt aus dem Regal genommen oder gekauft wird. Ferner kann sich der Nutzer identifizieren, beispielsweise durch Login-Daten seines Nutzergeräts, während eines bargeldlosen Bezahlvorgangs oder durch eine Kundenkarte.

Bei einer Weiterbildung werden bei den Produktinteraktionen Signale zwischen den Produkten und dem Nutzergerät mittels zumindest eines Transponders übertragen. Dies ermöglicht in vorteilhafter Weise die Detektion einer physischen Interaktion durch den Nutzer. Dabei können funktechnische Systeme mit begrenzter Reichweite detektieren, ob sich der Nutzer in räumlicher Nähe zu Produkten befindet. Auch hier können Produktinteraktionen durch den definierten Nutzer oder einen anderen Nutzer erfasst werden. Insbesondere können Signale beispielsweise durch RFID ("radio frequency identification") oder NFC ("near field communication") übertragen werden.

Beispielsweise kann ein Produkt, insbesondere an seiner Verpackung, einen Transponder umfassen, von dem etwa das mobile Nutzergerät des Nutzers Signale auslesen und das Produkt identifizieren kann. Umgekehrt kann die Position des Nutzers anhand eines Transponders, beispielsweise in seiner Kundenkarte oder an seinem Einkaufswagen, erfasst werden. Ferner können sowohl das Produkt als auch der Nutzer anhand von Transpondern identifiziert werden, beispielsweise durch eine geeignete Leseeinrichtung an einer bestimmten Position in einem Ausstellungsraum, an einem Einkaufswagen oder an einer Kasseneinrichtung. Die Merkmale der so erfassten Produktinteraktion können etwa die Identifikation des Produkts, das übertragene Signal sowie den Zeitpunkt und den Ort der Übertragung umfassen.

Insbesondere können die erfassten Produktinteraktionen sowohl physische als auch virtuelle Interaktionen umfassen. Beispielsweise kann sowohl das Verhalten von Nutzern einer Webseite als auch das Verhalten von Nutzern in einem Ladengeschäft dazu verwendet werden, die Prioritätsdaten der Produkte zu bestimmen oder zu verändern. Beispielsweise kann die Priorität von Produkten auf der Webseite davon abhängen, wie oft das Produkt derzeit im Ladengeschäft gekauft wird. Dadurch kann vorteilhafterweise für den Nutzer die Relevanz der Produkte genauer bestimmt werden.

Gemäß einer Ausgestaltung des erfindungsgemäßen Verfahrens wird zusätzlich zum Erfassen des Merkmals der Produktinteraktion zu einem Produkt der Zeitpunkt des Generierens des Merkmals der Produktinteraktion gespeichert. Die Veränderung der gespeicherten Prioritätsdaten der Produkte hängt dann ferner von dem Zeitpunkt des Generierens des jeweiligen Merkmals der Produktinteraktion ab. Alternativ oder zusätzlich kann auch der Zeitpunkt der Ausgabe von Informationen zu dem Produkt für einen anderen Nutzer bzw. durch ein anderes Nutzergerät gespeichert werden und die Prioritätsdaten verändern. Beispielsweise können Merkmale solcher Produktinteraktionen stärker gewichtet werden, die zeitlich näher an der Anfrage für eine Ausgabe von Informationen zu den Produkten durch den definierten Nutzer oder das definierte Nutzergerät liegen.

Gemäß einer Weiterbildung des erfindungsgemäßen Verfahrens werden solche Merkmale von Produktinteraktionen, die später generiert worden sind, stärker gewichtet als Merkmale von Produktinteraktionen, die zu einem früheren Zeitpunkt generiert worden sind.

Bei Merkmalen von Produktinteraktionen, die einer zeitlichen Schwankung unterliegen, kann auf diese Weise die Relevanz eines Produkts für den Nutzer bei dem erneuten Aufruf der Webseite besser widergespiegelt werden, so dass dem Nutzer vorteilhafterweise für ihn besonders relevante Produktinformationen ausgegeben werden. Merkmale von Produktinteraktionen, die zeitlichen Schwankungen unterliegen, betreffen beispielsweise Produkte mit Eigenschaften, die jahreszeitlichen Schwankungen unterliegen. Beispielsweise gibt es Produkte, die besonders relevant für die Winterzeit sind, andere Produkte sind insbesondere in der Sommerzeit relevant. Durch die Speicherung des Zeitpunkts des Generierens des Merkmals der Produktinteraktion, etwa bei einem Aufruf der Webseite durch einen anderen Nutzer, können zum Beispiel solche jahreszeitlichen Schwankungen berücksichtigt werden.

Gemäß einer Ausgestaltung des erfindungsgemäßen Verfahrens umfassen die Merkmale der Produktinteraktionen zu den Produkten die Häufigkeit der Interaktion mit diesen Produkten durch den anderen Nutzer oder das andere Nutzergerät. In diesem Fall steigt insbesondere der Wert der Prioritätsdaten des Produkts, wenn die Produktinteraktion, zum Beispiel die Ausgabe von Informationen zu diesem Produkt bei einem Aufruf der Webseite durch den anderen Clientcomputer oder von dem anderen Nutzer, häufig erfolgte.

Durch diese Maßnahmen ist es möglich, die Entwicklung des Interesses an einem Produkt in dem Teilzeitintervall, insbesondere zwischen zwei Aufrufen der Webseite durch den definierten Nutzer, zu berücksichtigen. Hat der Nutzer beispielsweise beim Besuch der Webseite Informationen zu einem bestimmten Produkt eingeholt und stieg danach das Interesse an diesem Produkt bei anderen Nutzern beim Besuch der Webseite stark an, wird bei dem erfindungsgemäßen Verfahren dieses gesteigerte Interesse anderer Nutzer, welches etwa mit einer Ausgabe von Informationen zu diesem Produkt oder mit einem Kauf dieses Produkts einhergeht, in den Prioritätsdaten des Produkts für den definierten Nutzer berücksichtigt, so dass auch die Relevanz dieses Produkts für den definierten Nutzer erhöht wird. Umgekehrt kann berücksichtigt werden, wenn das Interesse anderer Nutzer an diesem Produkt seitdem zurückgegangen ist, beispielsweise bei einem saisonal bedingten Rückgang des Interesses an Wintersportartikeln im Sommer.

Bei einer Weiterbildung umfassen die Merkmale der Produktinteraktionen zu den Produkten die Häufigkeit eines Kaufvorgangs dieser Produkte bei Interaktionen durch den anderen Nutzer oder das andere Nutzergerät, etwa bei einem Aufruf der Webseite durch den anderen Clientcomputer oder von dem anderen Nutzer. Der Wert der Prioritätsdaten des Produkts steigt dann besonders stark an, wenn das Produkt häufig von dem anderen Nutzer oder durch dessen Nutzergerät gekauft worden ist.

Die Ausgabe von Informationen zu den Produkten umfasst insbesondere die Anzeige einer Darstellung oder Beschreibung des Produkts. Diese Darstellung oder Beschreibung des Produkts kann insbesondere Teil einer Liste mit Produkten sein. Wenn eine Liste mit Informationen zu Produkten angezeigt wird, besitzt diese insbesondere eine Rangfolge oder eine bestimmte Reihenfolge. Die Prioritätsdaten eines Produkts bestimmen in diesem Fall insbesondere die Rangfolge eines Produkts innerhalb der Liste.

Gemäß einer Ausgestaltung des erfindungsgemäßen Verfahrens hängt die Rangfolge bzw. die Reihenfolge der Ausgabe von Informationen zu den Produkten unmittelbar nach der Anfrage für eine Ausgabe von Informationen durch den definierten Nutzer oder das definierte Nutzergerät von den gespeicherten Prioritätsdaten für die Produkte ab. Beispielsweise wird bei dem Aufruf der Webseite insbesondere eine sogenannte Startseite angezeigt, welche eine Liste mit Produktinformationen umfasst. Die Rangfolge dieser Liste wird in diesem Fall insbesondere durch die Prioritätsdaten der Produkte bestimmt, so dass Prioritätsdaten, die einen höheren Wert besitzen, in einem höheren Rang in der Liste angezeigt werden. Beispielsweise können Informationen zu Produkten mit einer höheren Priorität weiter oben in der Liste oder hervorgehoben dargestellt werden.

Gemäß einer Weiterbildung wird bei dem Verfahren eine Suchanfrage zur Suche nach Produkten empfangen. Für die zu den Produkten gespeicherten Produktdaten wird dann eine Relevanzbewertung zu der Relevanz des jeweiligen Produkts für die Suchanfrage durchgeführt. Für die Ausgabe der Informationen zu zumindest einer zweiten Teilmenge der Produkte wird dann eine Trefferliste für die Produkte erzeugt, bei der die Rangfolge der Produkte von der Relevanzbewertung und von den Prioritätsdaten abhängt.

Die Ausgabe von Informationen zu den Produkten erfolgt erfindungsgemäß in Abhängigkeit von den gespeicherten Prioritätswerten. Ferner ergibt sich die Informationsausgabe aus der entsprechenden Anfrage durch den Nutzer oder das Nutzergerät. Beispielsweise kann dies ein spezifiziertes Interesse des Nutzers, etwa eine Suchanfrage sein, für die zunächst unabhängig vom einzelnen Benutzer oder den Produktinteraktionen eine Relevanzbewertung der Produkte vorgenommen wird. Zur Beantwortung des spezifizierten Interesses wird eine Relevanzbewertung durchgeführt, etwa mittels der Suchbegriffe. Die Relevanzbewertung kann beispielsweise berücksichtigen, wie viele Worte der Suchanfrage im Beschreibungstext eines Produktes enthalten sind oder wie schnell das jeweilige Produkt geliefert werden kann. Als Verfahren zur Bewertung der Relevanz von Suchergebnissen können erfindungsgemäß etwa Verfahren verwendet werden, wie sie in der WO 2007/144199 A1 oder der WO 2012/025439 A1 beschrieben sind, deren Inhalt hiermit durch Bezugnahme in die vorliegende Schrift aufgenommen wird.

Anhand der Prioritätswerte, die sich aus vergangenen Produktinteraktionen des definierten Nutzers mit den Produkten ergeben, kann diese Relevanzbestimmung präzisiert werden. Insbesondere kann dabei eine Personalisierung der Ergebnisse erfolgen, wenn etwa die vergangenen Produktinteraktionen des Nutzers berücksichtigt werden. Insbesondere können ferner weitere Informationen über den Nutzer, etwa die Daten eines Nutzerprofils auf einer Webseite, in die Bewertung einfließen. Zum Beispiel kann das Alter, Geschlecht oder der Wohnort des Nutzers in die Bewertung einfließen.

Erfindungsgemäß werden nun die Prioritätswerte anhand der Produktinteraktionen anderer Nutzer angepasst. Insbesondere ist es dadurch möglich, eine zeitabhängige Anpassung vorzunehmen, etwa für ein in bestimmten Zeiträumen an- und abnehmendes Interesse an einem Produkt.

Erfolgt die Ausgabe der Informationen ohne ein vom Nutzer spezifiziertes Interesse, etwa beim Zusenden eines Werbebriefes, beim Anzeigen der Startseite eines Internet-Shops oder in einer Internet-Tageszeitung, so entfällt die Relevanzbestimmung auf Basis einer Suchanfrage und die Prioritäten werden beispielsweise anhand der vergangenen Produktinteraktionen des Nutzers und/oder der anderen Nutzer ermittelt.

Die bei einer herkömmlichen Suchanfrage generierte Trefferliste hängt in diesem Fall also nicht nur von der Relevanzbewertung zu der Suchanfrage ab, sondern auch von den Prioritätsdaten, d.h. von zwischenzeitlich generierten Merkmalen von Produktinteraktionen durch einen anderen Nutzer oder ein anderes Nutzergerät. Hierdurch kann die Trefferliste für die Suchanfrage des definierten Nutzers vorteilhafterweise verbessert werden.

Bei Weiterbildungen der Erfindung werden noch weitere Parameter beim Erzeugen der Prioritätsdaten einbezogen. Beispielsweise können weitere zu den Produkten gehörige Daten gespeichert werden. Die gespeicherten Prioritätsdaten der Produkte hängen dann ferner von diesen weiteren Daten ab. Bei den weiteren Daten kann es sich beispielsweise um eine aktuelle Gewinnmarge eines Produkts und/oder die aktuelle Verfügbarkeit des Produkts handeln.

Die Erfindung betrifft des Weiteren ein Verfahren zum Betreiben einer Webseite für den E-Commerce, bei dem eine Interaktion mit zumindest einem Produkt durch einen definierten Nutzer oder ein definiertes Nutzergerät erfasst wird. Es werden dann Daten zu dem Produkt gespeichert, zu dem eine Interaktion erfasst worden ist. Zu zumindest einer Teilmenge der Produkte werden dann Prioritätsdaten erzeugt, wie es vorstehend beschrieben worden ist. Ein Aufruf der Webseite durch diesen Nutzer oder dessen Nutzergerät wird dann erfasst und es werden Informationen zu den Produkten in Abhängigkeit von den gespeicherten Prioritätsdaten ausgegeben.

Bei einer Ausbildung ist die Interaktion mit dem zumindest einen Produkt ein Aufruf der Webseite, bei dem Informationen zu dem Produkt ausgegeben werden, insbesondere eine Anzeige einer Darstellung und/oder Beschreibung des Produkts.

Bei einer Weiterbildung dieses Verfahrens wird bei dem Aufruf der Webseite eine Clientcomputer-Identifikation übertragen und anhand der übertragenen Clientcomputer-Identifikation wird bestimmt, ob die Webseite von dem Clientcomputer oder einem anderen Clientcomputer aufgerufen wurde. Gleichermaßen kann bei dem Aufruf der Webseite eine Nutzeridentifikation durchgeführt werden und anhand der Nutzeridentifikation bestimmt werden, ob die Webseite von dem Nutzer oder einem anderen Nutzer aufgerufen wurde.

Bei einer anderen Ausbildung ist die Interaktion mit den Produkten eine räumliche Nähe zwischen den Produkten und dem Nutzer und/oder dem Nutzergerät wie es vorstehend erläutert wurde.

Die Erfindung betrifft des Weiteren ein Computerprogrammprodukt mit Programmcode zur Durchführung des Verfahrens gemäß dem vorstehend beschriebenen Verfahren, wenn der Programmcode von einem Computer ausgeführt wird.

Die Erfindung wird nun anhand von Ausführungsbeispielen mit Bezug zu den Zeichnungen erläutert.
- Figur 1: zeigt den grundsätzlichen Aufbau eines Systems zum Ausführen des Ausführungsbeispiels des erfindungsgemäßen Verfahrens,
- Figur 2: zeigt den Aufbau eines Servers, auf dem Software gespeichert ist, mit welcher das Ausführungsbeispiel des erfindungsgemäßen Verfahrens ausgeführt werden kann,
- Figur 3: zeigt die zeitliche Entwicklung der Häufigkeit des Kaufs des Produkts P-1 während eines Jahres und
- Figur 4: zeigt die zeitliche Entwicklung der Häufigkeit des Kaufs des Produkts P-2 während eines Jahres.

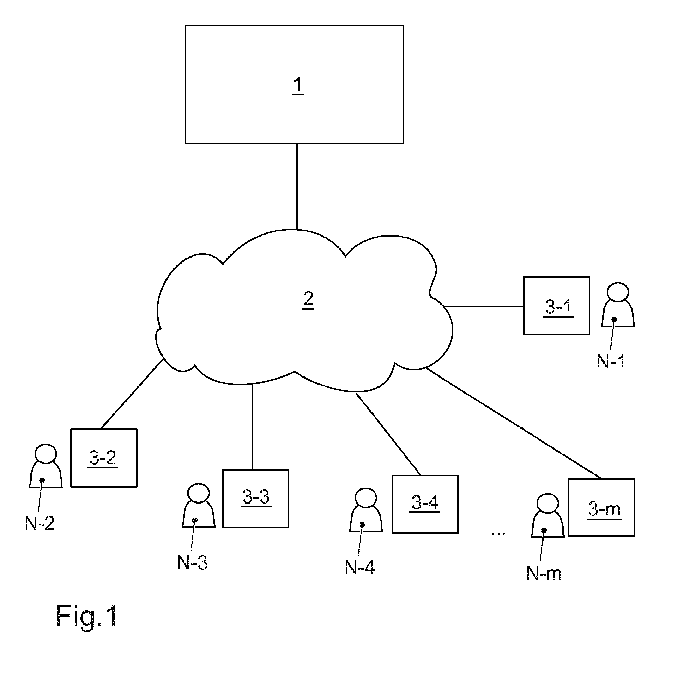

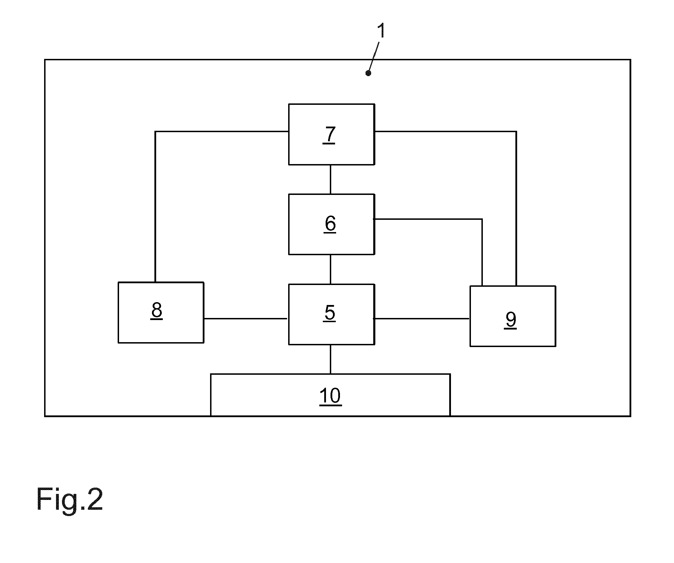

Mit Bezug zu den Figuren 1 und 2 wird zunächst der grundsätzliche Aufbau eines Systems zum Ausführen des Ausführungsbeispiels des erfindungsgemäßen Verfahrens erläutert:

Auf einem Server 1 ist eine Software bzw. ein Programmcode zum Ausführen eines E-Commerce-Verfahrens gespeichert. Der Server 1 ist mit dem Internet 2 oder einem anderen geeigneten Netzwerk verbunden. Gleichermaßen ist ein Nutzergerät 3-1, hier ein Clientcomputer 3-1, eines definierten Nutzers N-1 mit dem Internet 2 verbunden. Ferner sind weitere Nutzergeräte 3-2, 3-3, 3-4, ..., 3-m, im dargestellten Fall Clientcomputer 3-2, 3-3, 3-4, ..., 3-m, der Nutzer N-2 bis N-m mit dem Internet 2 verbunden. Auf an sich bekannte Weise können die Nutzer N-1 bis N-m mittels der Clientcomputer 3-1 bis 3-m über das Internet 2 auf den Server 1 zugreifen und eine Webseite, die von dem Server 1 erzeugt wird, aufrufen und auf diese Weise Informationen auf den Clientcomputern 3-1 bis 3-m zur Anzeige bringen. Unter einer Webseite wird hier der Internetauftritt des E-Commerce-Anbieters verstanden. Die Webseite kann somit mehrere Unterwebseiten umfassen.

Der Server 1 umfasst eine zentrale Steuereinheit 5, die mit einer Grafikeinheit 6 gekoppelt ist. Von der Grafikeinheit 6 werden Anzeigen für die Webseite erzeugt. Der Inhalt der Anzeige wird von der zentralen Steuereinheit 5 vorgegeben. Zum Erzeugen der Anzeigen greift die Grafikeinheit 6 auf eine Datenbank 7 zu. Die Datenbank 7 umfasst insbesondere Daten von einer Vielzahl von Produkten P-1 bis P-n. Die Produktdaten umfassen insbesondere Darstellungen und Beschreibungen der Produkte P-1 bis P-n. Es sind jedoch noch weitere Metadaten zu den Produkten P-1 bis P-n gespeichert, wie es später erläutert wird.

Der Server 1 umfasst des Weiteren eine Suchmaschine 8. Die Suchmaschine 8 erzeugt auf Suchanfragen eine Trefferliste, in der in einer Rangfolge Informationen zu Produkten P-1 bis P-n aufgeführt sind, die in der Datenbank 7 gespeichert sind.

Die Steuereinheit 5 ist mit einer bidirektionalen Schnittstelle 10 verbunden, über welche der Server 1 mit dem Internet 2 gekoppelt ist. Über die Schnittstelle 2 kann der Server 1 Daten zur Anzeige der Webseite an die Clientcomputer 3-1 bis 3-m übertragen. Ferner können Eingaben, die mittels der Clientcomputer 3-1 bis 3-m getätigt wurden, über das Internet 2 an den Server 1 übertragen werden.

Des Weiteren umfasst der Server 1 eine Erfassungseinheit 9. Mittels der Erfassungseinheit 9 werden beim Aufruf der Webseite durch den Clientcomputer 3-1 oder durch einen definierten Nutzer N-1 Daten zu Produkten P-1 bis P-n gespeichert, zu denen Informationen bei dem Aufruf der Webseite ausgegeben, insbesondere angezeigt worden sind. Der Nutzer N-1 interagiert also mit den Produkten P-1 bis P-n, indem er sich Informationen zu ihnen ausgeben lässt. Diese Daten werden als Metadaten zu den Produkten P-1 bis P-n in der Datenbank 7 gespeichert. Des Weiteren werden mittels der Erfassungseinheit 9 Merkmale von Produktinteraktionen erfasst, die bei einem Aufruf der Webseite durch einen anderen Clientcomputer 3-2 bis 3-m oder von einem anderen Nutzer N-2 bis N-m generiert werden. Auch diese Merkmale von Produktinteraktionen werden als Metadaten zu den Produkten P-1 bis P-n in der Datenbank 7 gespeichert. Welche Merkmale von Produktinteraktionen von der Erfassungseinheit 9 erfasst werden, wird später mit Bezug zu dem Ausführungsbeispiel des erfindungsgemäßen Verfahrens erläutert.

Die Datenbank 7 enthält zu den Produkten P-1 bis P-n als weitere Metadaten Prioritätsdaten, die für verschiedene Nutzer Prioritätswerte enthalten. Diese Prioritätsdaten können von den verschiedenen Einrichtungen des Servers 1, insbesondere von der zentralen Steuereinheit 5, der Suchmaschine 8 und der Erfassungseinheit 9 verändert werden. Details, wie diese Prioritätsdaten erzeugt und verändert werden, werden später mit Bezug zu dem Ausführungsbeispiel des erfindungsgemäßen Verfahrens erläutert.

Im Folgenden wird ein Ausführungsbeispiel zum Betreiben einer Webseite für den E-Commerce mittels des Servers 1 beschrieben, welches ein Ausführungsbeispiel zum Erzeugen von Prioritätsdaten für Produkte P-1 bis P-n umfasst:

Als Ausgangspunkt für das Verfahren sind in der Datenbank 7 Informationen zu einer Vielzahl von Produkten P-1 bis P-n gespeichert. Zu jedem Produkt P-1 bis P-n ist beispielsweise eine Darstellung sowie eine Beschreibung des Produkts enthalten. Des Weiteren sind Attribute zu dem Produkt gespeichert sowie Metadaten, zu denen Prioritätsdaten für bestimmte Nutzer bzw. Clientcomputer gehören.

Mittels eines Browsers des Clientcomputers 3-1 ruft der Nutzer N-1 die Webseite des Servers 1 auf. Beim Aufruf der Webseite wird eine Clientcomputer-Identifikation an den Server 1 übertragen, welcher sie in der Datenbank 7 speichert. Gleichzeitig wird der Zeitpunkt des Aufrufs der Webseite durch diesen Clientcomputer 3-1 gespeichert. Des Weiteren wird beim Aufruf der Webseite eine Identifikation des Nutzers N-1 durchgeführt. Beispielsweise loggt sich der Nutzer N-1 mittels eines Passworts ein. Auch der Zeitpunkt des Einloggens dieses Nutzers N-1 wird in der Datenbank 7 gespeichert.

Anschließend ruft der Nutzer N-1 über den Clientcomputer 3-1 auf an sich bekannte Weise Informationen von dem Server 1 ab und interagiert dadurch mit den Produkten P-1 bis P-n, zu denen er etwa Informationen abruft. Beispielsweise kann er eine Suche nach verschiedenen Produkten P-1 bis P-n des E-Commerce-Anbieters durchführen. Mittels der Suchmaschine 8, der Grafikeinheit 6 und der zentralen Steuereinheit 5 wird dem Nutzer N-1 beispielsweise eine Trefferliste angezeigt, die in einer bestimmten Rangfolge Informationen zu den verschiedenen Produkten P-1 bis P-n des E-Commerce-Anbieters umfasst. In der Datenbank 7 werden während des Besuchs der Webseite Metadaten zu Produkten P-1 bis P-n gespeichert, welche insbesondere die Informationen umfassen, mit welchen Produkten P-1 bis P-n der Nutzer N-1 interagiert hat. Zu solchen Merkmalen der Produktinteraktionen gehört etwa, zu welchen Produkten P-1 bis P-n Informationen ausgegeben wurden, welche Produkte P-1 bis P-n der Nutzer N-1 in einen elektronischen Warenkorb gelegt hat oder einer elektronischen Merkliste hinzugefügt hat und welche Produkte P-1 bis P-n der Nutzer N-1 gekauft hat.

Verlässt der Nutzer N-1 die Webseite wieder, indem er sich beispielsweise ausloggt oder der Browser des Clientcomputers 3-1 geschlossen wird, werden in Abhängigkeit von den während des Besuchs der Webseite erfassten Daten Prioritätsdaten zu den Produkten P-1 bis P-n und für diesen Nutzer N-1 erzeugt und in der Datenbank 7 gespeichert. Insbesondere werden Prioritätsdaten zu einer Teilmenge der Gesamtmenge der Produkte P-1 bis P-n erzeugt. Diese Teilmenge kann genau die Produkte P-1 bis P-n umfassen, mit denen der Nutzer N-1 interagiert hat. Allerdings kann sie in einem anderen Beispiel auch weitere Produkte P-1 bis P-n enthalten, die etwa der gleichen Kategorie zugehören oder ähnliche Eigenschaften haben wie die Produkte P-1 bis P-n, mit denen der Nutzer N-1 interagiert hat. Ferner kann diese Teilmenge bestimmt werden, indem durch ein Ähnlichkeitsmaß die Ähnlichkeit der einzelnen Produkte P-1 bis P-n bestimmt wird im Verhältnis zu den Produkten P-1 bis P-n, mit denen der Nutzer N-1 interagiert hat. Dies kann auch durch die Verwendung eines neuronalen Netzes geschehen, die Ähnlichkeit zwischen Produkten P-1 bis P-n bestimmt, ohne dass diese notwendigerweise ähnliche Eigenschaften haben müssen. Als Verfahren zum Bestimmen des Ähnlichkeitsmaßes können ferner Verfahren verwendet werden, wie sie in der WO 2007/144199 A1 oder der WO 2012/025439 A1 beschrieben sind.

Beispielsweise wird Produkten P-1 bis P-n, zu denen Informationen dem Nutzer N-1 angezeigt worden sind, ein erster Prioritätswert zugeordnet, zu Produkten P-1 bis P-n, die der Nutzer N-1 in die elektronische Merkliste hinzugefügt hat, ein zweiter, höherer Prioritätswert zugeordnet und zu Produkten P-1 bis P-n, die der Nutzer N-1 in den elektronischen Warenkorb gelegt hat, jedoch nicht gekauft hat, ein dritter, noch höherer Prioritätswert zugeordnet. In diesem Fall umfasst die Teilmenge lediglich die Produkte P-1 bis P-n, mit denen der Nutzer N-1 interagiert hat.

In einem anderen Beispiel wird, wenn der Nutzer N-1 ein erstes Produkt P-1 bis P-n in den elektronischen Warenkorb gelegt hat, auch anderen Produkten P-1 bis P-n ein hoher Prioritätswert zugeordnet. Dabei sind die anderen Produkte P-1 bis P-n dem ersten Produkt P-1 bis P-n ähnlich, beispielsweise das gleiche Modell eines Produkts P-1 bis P-n in einer anderen Farbe, in einem anderen Material oder ein ähnliches Produkt P-1 bis P-n eines anderen Herstellers.

Diese Prioritätsdaten werden bei einem erneuten Aufruf der Webseite durch den Clientcomputer 3-1, zu dem die Clientcomputer-Identifikation gespeichert worden ist, oder von dem Nutzer N-1, der anhand der Nutzeridentifikation ermittelt wurde, verwendet, um Informationen zu diesen Produkten P-1 bis P-n beispielsweise auf der Startseite der Webseite anzuzeigen.

Ruft beispielsweise der Nutzer N-1 mittels des Clientcomputers 3-1 die Webseite erneut auf, wird dies mittels der Clientcomputer-Identifikation oder mittels der Nutzeridentifikation von dem Server 1 erfasst. Daraufhin ruft die zentrale Steuereinheit 5 von der Datenbank 7 die für diesen Nutzer N-1 bzw. diesen Clientcomputer 3-1 gespeicherten Prioritätsdaten zu bestimmten Produkten P-1 bis P-n ab und erzeugt mittels der Grafikeinheit 6 eine Startseite, welche eine Liste mit Informationen zu Produkten P-1 bis P-n enthält. Die Rangfolge der Produkte P-1 bis P-n in dieser Liste richtet sich dabei nach den Prioritätsdaten. Mit höchstem Rang können beispielsweise Informationen zu den Produkten P-1 bis P-n angezeigt werden, die der Nutzer N-1 bei dem letzten Aufruf der Webseite zwar in den elektronischen Warenkorb gelegt hat, diese jedoch nicht gekauft hat. Mit dem nächstniedrigeren Rang werden Informationen zu den Produkten P-1 bis P-n angezeigt, welche der Nutzer N-1 einer Merkliste hinzugefügt hat. Mit noch niedrigerem Rang werden Informationen zu den Produkten P-1 bis P-n angezeigt, welche dem Nutzer N-1 bei dem letzten Aufruf der Webseite nur angezeigt wurden. Analog dazu kann der Rang verschiedener Produkte P-1 bis P-n beispielsweise zur Erzeugung einer Werbe-E-Mail an den Nutzer N-1 verwendet werden, um auf diesem Wege Informationen zu den Produkten P-1 bis P-n auszugeben. Diesen Situationen ist gemein, dass dem Nutzer N-1 Informationen ausgegeben werden, ohne dass er die gewünschten Informationen spezifiziert hätte, beispielsweise durch eine Suchanfrage. Beispielsweise entspricht der Aufruf der Webseite, auf deren Startseite sich die Liste mit Informationen zu Produkten P-1 bis P-n befindet, einer solchen unspezifischen Informationsabfrage.

Gibt der Nutzer N-1 in einem weiteren Ausführungsbeispiel weitere Relevanzkriterien vor, beispielsweise indem er mit Suchbegriffen eine Suchanfrage startet, so kommt zu den Prioritätsdaten zu den Produkten P-1 bis P-n noch die Relevanzbewertung hinzu, die unabhängig vom Nutzer N-1 durchgeführt wird. Beispielsweise sucht der Nutzer nach dem Begriff "Mantel". Darauf werden zunächst solche Produkte gesucht, die dem Suchbegriff entsprechen, und entsprechend ihrer Relevanz geordnet. Ferner wird anhand der Prioritätsdaten zu den Produkten die Rangfolge der Produkte verändert, etwa wenn der Nutzer N-1 bereits zu einem früheren Zeitpunkt einen Mantel zu seiner Merkliste hinzugefügt hat. Ferner werden die Interaktionen andere Nutzer N-2 bis N-m berücksichtigt und beispielsweise ein solcher Mantel mit hohem Rang angezeigt, der derzeit besonders häufig gekauft wird.

Bei dem oben beschriebenen Beispiel finden virtuelle Produktinteraktionen auf einer Webseite statt, beispielsweise durch den Aufruf von Informationen zu einem Produkt P-1 bis P-n, das Hinzufügen zu einer Merkliste oder einen Kaufvorgang. Analog dazu kann die Ausgabe von Informationen zu den Produkten auf anderen Wegen erfolgen, etwa durch eine Werbesendung, eine Broschüre oder eine E-Mail. Als Produktinteraktionen kann dann beispielsweise ausgewertet werden, dass der Nutzer N-1 eine E-Mail mit Informationen zu einem Produkt P-1 bis P-n erhält, sie aufruft und/oder über einen Link in der E-Mail weitere Informationen zu einem bestimmten Produkt P-1 bis P-n aufruft.

Im Folgenden wird ein Ausführungsbeispiel zum Erfassen von physischen Produktinteraktionen mittels des Servers 1 beschrieben, welches ein weiteres Ausführungsbeispiel zum Erzeugen von Prioritätsdaten für Produkte P-1 bis P-n umfasst:

Wie im oben beschriebenen Fall sind auch hier als Ausgangspunkt für das Verfahren in der Datenbank 7 Informationen zu einer Vielzahl von Produkten P-1 bis P-n gespeichert. Zu jedem Produkt P-1 bis P-n sind beispielsweise Metadaten gespeichert, zu denen Prioritätsdaten für bestimmte Nutzer N-1 bis N-m bzw. Clientcomputer 3-1 bis 3-m gehören.

Die Produkte P-1 bis P-n stehen in den Ausstellungs- und Verkaufsräumen eines Ladengeschäfts in einem Regal. Auf der Verpackung der Produkte sind P-1 bis P-n Transponder angebracht, etwa RFID- oder NFC-Transponder, von denen durch ein geeignetes Lesegerät die Identifikation der einzelnen Produkte P-1 bis P-n ausgelesen werden kann. Der Nutzer N-1 bewegt sich durch das Geschäft, wobei er ein Nutzergerät 3-1 mit sich führt, etwa ein Mobiltelefon 3-1, das eine Einrichtung zum Auslesen der Transponder umfasst. Bleibt der Nutzer N-1 vor dem Regal stehen, in dem sich das Produkt P-1 bis P-n befindet, so kann eine Anwendung, die auf dem Mobiltelefon 3-1 installiert ist und ausgeführt wird, die räumliche Nähe zu dem Produkt P-1 bis P-n (bzw. zu dem RFID-Transponder) detektieren und die Merkmale dieser Produktinteraktion an den Server 1 übertragen. Dabei erlaubt die Verwendung des Mobiltelefons 3-1 eine Identifikation des Nutzers N-1, etwa durch die Übertragung von Login-Daten an den Server 1. Beispielsweise kann erfasst werden, wann und wie lange der Nutzer N-1 bei dem Produkt P-1 bis P-n verweilt. Ferner können weitere Produktinteraktionen erfasst werden, beispielsweise ob der Nutzer N-1 das Produkt P-1 bis P-n aus dem Regal nimmt, ob er sich etwa mittels des Mobiltelefons 3-1 weitere Informationen zu dem Produkt P-1 bis P-n anzeigen lässt oder ob er das Produkt P-1 bis P-n in seinen Einkaufswagen legt. Ferner kann erfasst werden, wenn der Nutzer N-1 das Produkt P-1 bis P-n kauft und an der Kasseneinrichtung des Geschäfts bezahlt.

Bei der Benutzung von Transpondern zur Detektion der Produktinteraktion kann der Transponder am Produkt P-1 bis P-n, insbesondere an seiner Verpackung, angebracht sein, allerdings kann auch der Nutzer N-1 einen Transponder mit sich führen, beispielsweise in Form eines geeigneten Nutzergeräts 3-1 oder eines Transponders in einer Kunden- oder Kreditkarte oder an einem Einkaufswagen. Ein solcher, dem Nutzer N-1 zugeordneter Transponder kann etwa von Einrichtungen in den Geschäftsräumen ausgelesen werden, um die Position des Nutzers, etwa vor dem Regal mit dem Produkt P-1 bis P-n, oder seine Interaktionen mit Produkten P-1 bis P-n zu erfassen.

Die Erfassung der Produktinteraktionen kann auch durch andere Einrichtungen erfolgen, beispielsweise durch ein Kamerasystem oder eine Datenbrille des Nutzers N-1, die etwa erfassen, wo sich der Nutzer N-1 befindet, ob der Nutzer N-1 ein Produkt P-1 bis P-n aus dem Regal nimmt, es in den Einkaufswagen legt oder kauft. Ein solches System kann auch den Nutzer N-1 identifizieren oder erfassen, welche Produkte P-1 bis P-n der Nutzer N-1 betrachtet. Das Kamerasystem kann etwa im Geschäft angebracht oder mobil sein, beispielsweise als Kamera einer Datenbrille des Nutzers N-1. Ferner kann die Kasseneinrichtung Kaufvorgänge als Produktinteraktionen erfassen und an den Server 1 übertragen.

In Abhängigkeit von den während des Besuchs des Geschäftes erfassten und an den Server 1 übertragenen Daten werden Prioritätsdaten zu den Produkten P-1 bis P-n und für den Nutzer N-1 erzeugt und in der Datenbank 7 gespeichert. Beispielsweise wird Produkten P-1 bis P-n, die der Nutzer N-1 aus dem Regal genommen hat, ein erster Prioritätswert zugeordnet, zu Produkten, zu denen der Nutzer N-1 zusätzliche Informationen aufgerufen hat, ein zweiter, höherer Prioritätswert zugeordnet und zu Produkten P-1 bis P-n, die der Nutzer N-1 in den Einkaufswagen gelegt hat, schließlich jedoch nicht gekauft hat, ein dritter, noch höherer Prioritätswert zugeordnet. Analog dazu können auch Produktinteraktionen anderer Nutzer N-2 bis N-m ausgewertet werden, beispielsweise kann einer großen Häufigkeit von Kaufvorgängen ein bestimmter Prioritätswert zugeordnet werden.

Wie bereits oben für virtuelle Interaktionen beschrieben, können auch die Prioritätsdaten für andere Produkte P-1 bis P-n verändert werden als nur die, mit denen der Nutzer N-1 interagiert hat. Beispielsweise können die Prioritätsdaten von Produkten P-1 bis P-n anhand der Merkmale von Interaktionen mit ähnlichen Produkten verändert werden. Beispielsweise kann ein häufiger Kauf von Wintermänteln auch die Prioritätsdaten anderer Produkte P-1 bis P-n aus der Kategorie "Winterbekleidung" erhöhen.

Ruft der Nutzer N-1 nun beispielsweise die Webseite des Geschäfts auf, so werden diese Prioritätsdaten verwendet, um Informationen zu diesen Produkten P-1 bis P-n beispielsweise auf der Startseite der Webseite anzuzeigen. Die Ausgabe der Informationen zu den Produkten P-1 bis P-n erfolgt dabei analog zu dem oben beschriebenen Verfahren, wobei sich die Rangfolge der Produkte P-1 bis P-n in der angezeigten Liste auch nach den Prioritätsdaten richtet, die aus den Daten über die physischen Produktinteraktionen bestimmt wurden. Mit höchstem Rang können beispielsweise Informationen zu den Produkten P-1 bis P-n angezeigt werden, die der Nutzer N-1 bei dem letzten Aufruf der Webseite zwar in den Einkaufswagen gelegt hat, diese jedoch nicht gekauft hat.

Analog zum Aufruf einer Webseite können dem Nutzer N-1 Informationen zu den Produkten P-1 bis P-n auch im physischen Raum, etwa des Geschäfts angezeigt werden. Beispielsweise detektiert eine Anzeigeeinrichtung im Geschäft, dass sich der Nutzer N-1 vor ihr befindet. In Abhängigkeit von den Prioritätsdaten der Produkte P-1 bis P-n werden dem Nutzer dann Informationen angezeigt, die für ihn relevant sind. Beispielsweise kann auch ein Berater den Nutzer N-1 identifizieren und Informationen darüber abrufen, Informationen zu welchen Produkten P-1 bis P-n für den Nutzer N-1 besonders relevant sind. Dem Nutzer N-1 werden in diesem Fall die Informationen durch das Gespräch mit dem Berater bereitgestellt.

In einem weiteren Ausführungsbeispiel interagiert der Nutzer N-1 während eines Gesprächs mit den Produkten P-1 bis P-n: Beispielsweise kann dem Nutzer N-1 ein Produkt P-1 bis P-n präsentiert werden, etwa im Rahmen eines Beratungsgesprächs oder eines Telefonanrufs. Die mündliche Weitergabe von Informationen an den Benutzer entspricht dabei der Anzeige von Informationen zu dem Produkt P-1 bis P-n auf einer Webseite. Dabei kann zum Beispiel das Interesse des Nutzers N-1 an dem vorgestellten Produkt P-1 bis P-n erfasst werden. Ferner kann erfasst werden, ob der Nutzer N-1 zum Beispiel Informationen zu einem bestimmten Produkt P-1 bis P-n nachfragt oder ein Produkt P-1 bis P-n kauft.

In einem weiteren Ausführungsbeispiel werden sowohl physische Produktinteraktionen, etwa in einem Geschäft, als auch virtuelle Produktinteraktionen, etwa auf einer Webseite, erfasst und tragen zur Bestimmung der Prioritätsdaten bei.

Die oben beschriebenen Produktinteraktionen, etwa in einem Geschäft, können analog auch für andere Nutzer N-2 bis N-m erfasst und an den Server 1 übertragen werden. Dabei können die Produktinformationen auch ohne eine Identifikation des einzelnen Nutzers erfasst werden. Beispielsweise kann die Häufigkeit eines Kaufvorgangs auch bestimmt werden, wenn die Identität der einzelnen Käufer unbekannt ist.

Im Folgenden wird erläutert, wie die Prioritätsdaten in dem Zeitintervall zwischen einer Produktinteraktion des Nutzers N-1 oder des Nutzergeräts 3 und einer Anfrage für eine Ausgabe von Informationen zu den Produkten P-1 bis P-n verändert werden. Bei dem dargestellten Beispiel ist dies das Zeitintervall zwischen einem Aufruf der oben beschriebenen Webseite für den E-Commerce und dem erneuten Aufruf der Webseite durch den Clientcomputer 3-1 oder von dem Nutzer N-1:

In dem Zeitintervall wird erfasst, wenn über andere Clientcomputer 3-2 bis 3-m oder andere Nutzer N-2 bis N-m Informationen zu bestimmten Produkten P-1 bis P-n angezeigt werden, bestimmte Produkte P-1 bis P-n in den elektronischen Warenkorb gelegt werden oder auf eine elektronische Merkliste gesetzt werden oder von anderen Nutzern N-2 bis N-m gekauft werden. Diese durch andere Nutzer ausgelösten Ereignisse gehören zu den Produktinteraktionen, deren Merkmale in dem Zeitintervall zwischen dem Aufruf und dem erneuten Aufruf der Webseite durch den Clientcomputer 3-1 oder dem Nutzer N-1 mittels der Erfassungseinheit 9 erfasst werden. In der Datenbank 7 wird gespeichert, dass ein solches Merkmal einer Produktinteraktion erfasst worden ist, welches Merkmal einer Produktinteraktion erfasst worden ist und wann es erfasst worden ist. Auch in diesem Fall kann unterschieden werden, ob Informationen zu einem Produkt P-1 bis P-n nur angezeigt worden sind oder ob der andere Nutzer N-2 bis N-m das Produkt P-1 bis P-n in den elektronischen Warenkorb gelegt oder es auf die elektronische Merkliste gesetzt hat oder das Produkt P-1 bis P-n gekauft hat. Diese Merkmalstypen können dann bei der Veränderung der Prioritätsdaten der Produkte P-1 bis P-n für den Nutzer N-1 bzw. den Clientcomputer 3-1 berücksichtigt werden.

Die Merkmale der Interaktionen zu den Produkten werden fortwährend erfasst, wenn sich andere Clientcomputer 3-2 bis 3-m oder andere Nutzer N-2 bis N-m einloggen und/oder die Webseite aufrufen. Wenn nun der Nutzer N-1 oder der Clientcomputer 3-1 erneut die Webseite des Servers 1 aufruft, werden die ursprünglich beim vorherigen Aufruf der Webseite durch diesen Nutzer N-1 bzw. den Clientcomputer 3-1 gespeicherten Prioritätsdaten der Produkte P-1 bis P-n verändert bzw. aktualisiert. Analog zum oben beschriebenen Verfahren zur Erzeugung der Prioritätsdaten nach einer ersten Interaktion durch den Nutzer N-1, können dabei auch solche Produktinteraktionen berücksichtigt werden, die ähnliche Produkte P-1 bis P-n betreffen.

Insbesondere wird aus den Merkmalen der Produktinteraktionen eine Interaktions-Intensität, beispielsweise die Häufigkeit einer bestimmten Interaktion, in Abhängigkeit von der Zeit bestimmt. Dabei wird ein Glättungsverfahren angewandt, um die zu diskreten Zeitpunkten erfassten Merkmale der Produktinteraktionen auf umliegende Zeiträume zu verteilen. Insbesondere kann eine Mittelwertbildung über einen definierten Zeitraum erfolgen, etwa über eine Woche, einen Monat oder ein Jahr. Zur Veränderung der Prioritätsdaten wird beispielsweise die Interaktions-Intensität zu dem Zeitpunkt der früheren Interaktion des Nutzers N-1 mit dem Produkt verglichen mit der Interaktions-Intensität zu dem Zeitpunkt des erneuten Aufrufs der Webseite. Zu diesem Vergleich kann etwa der Quotient der beiden Werte gebildet werden, um die aktuellen Prioritätsdaten für den Nutzer N-1 zu bestimmen.

Gemäß einem Ausführungsbeispiel wird die Häufigkeit ermittelt, mit der Informationen zu einem Produkt P-1 bis P-n bei einem Aufruf der Webseite durch einen anderen Clientcomputer 3-2 bis 3-m bzw. einen anderen Nutzer N-2 bis N-m angezeigt worden ist. Ferner werden die Häufigkeiten dafür ermittelt, dass ein Produkt von einem anderen Nutzer N-2 bis N-m bzw. durch andere Clientcomputer 3-2 bis 3-m in den Warenkorb gelegt oder auf eine Merkliste gesetzt wurde oder gekauft wurde. Auch diese Häufigkeiten gehören zu den Merkmalen der Produktinteraktionen, die in dem Zeitintervall zwischen dem Aufruf und dem erneuten Aufruf der Webseite durch den Clientcomputer 3-1 oder dem Nutzer N-1 mittels der Erfassungseinheit 9 erfasst werden. Je größer diese Häufigkeit ist, desto mehr wird der Wert der Prioritätsdaten erhöht. Des Weiteren wird der Wert der Prioritätsdaten noch stärker erhöht, wenn ein Produkt von einem anderen Nutzer N-2 bis N-n gekauft worden ist im Vergleich zu dem Fall, dass das Produkt P-1 bis P-n nur in den elektronischen Warenkorb gelegt oder auf die elektronische Merkliste gesetzt worden oder nur angezeigt worden ist.

Gemäß einem weiteren Ausführungsbeispiel wird zwar allenfalls das Zeitintervall zwischen dem Aufruf und dem erneuten Aufruf der Webseite durch den Clientcomputer 3-1 oder von dem Nutzer N-1 betrachtet. Wenn dieses Zeitintervall jedoch länger als ein vorab definiertes Teilzeitintervall ist, werden nur Erfassungen von Merkmalen von Produktinteraktionen in diesem Teilzeitintervall vor dem erneuten Aufruf der Webseite durch den Clientcomputer 3-1 oder von dem Nutzer N-1 berücksichtigt. Das Teilzeitintervall kann beispielsweise einen Zeitraum von einer Woche, einem Monat oder vier Monaten umfassen. Auf diese Weise lassen sich saisonbedingte oder jahreszeitliche Schwankungen der Relevanz eines Produkts P-1 bis P-n berücksichtigen.

Gemäß einem weiteren Ausführungsbeispiel werden die Prioritätsdaten der Produkte P-1 bis P-n nicht erst dann verändert, wenn die Webseite erneut von durch den Clientcomputer 3-1 oder von dem Nutzer N-1 aufgerufen wurde. Vielmehr können die Prioritätsdaten auch laufend verändert werden, wenn die Merkmale der Produktinteraktionen aufgrund des Aufrufs der Webseite durch andere Nutzer N-2 bis N-m erfasst wurden.

Alternativ oder zusätzlich können die oben beschriebenen physischen Produktinteraktionen durch andere Nutzer N-2 bis N-m oder andere Nutzergeräte 3-2 bis 3-m zur Veränderung der Prioritätsdaten beitragen. Beispielsweise können die Prioritätsdaten auch von der Häufigkeit in einem Geschäft abhängen. Beispielsweise kann dadurch ein Produkt P-1 bis P-n, das aktuell besonders häufig von anderen Nutzern N-2 bis N-m gekauft wird, eine höhere Priorität erhalten. Insbesondere kann die Kombination von Daten aus physischen und virtuellen Produktinteraktionen die Genauigkeit der Relevanzbestimmung verbessern.

Gemäß einem weiteren Ausführungsbeispiel können zu den Produkten P-1 bis P-n in der Datenbank 7 auch aktuelle Gewinnmargen oder Verfügbarkeiten des Produkts P-1 bis P-n gespeichert sein. Die Prioritätsdaten eines Produkts P-1 bis P-n können dann bei einer hohen Gewinnmarge zusätzlich erhöht bzw. bei einer niedrigen Gewinnmarge erniedrigt werden. Ferner können die Prioritätsdaten bei einer Verfügbarkeit des Produkts P-1 bis P-n und noch mehr bei einem hohen Lagerbestand des Produkts P-1 bis P-n erhöht werden bzw. bei einer Nichtverfügbarkeit des Produkts P-1 bis P-n erniedrigt werden.

Die veränderten Prioritätsdaten werden dann dazu verwendet, auf dem Clientcomputer 3-1 z.B. eine Startseite anzuzeigen, welche eine Liste mit Informationen zu Produkten P-1 bis P-n enthält. Die Rangfolge dieser Informationen zu den Produkten P-1 bis P-n richtet sich in diesem Fall nach dem Wert der Prioritätsdaten der Produkte P-1 bis P-n. Produkte mit hohen Werten der Prioritätsdaten werden höher und/oder hervorgehobener dargestellt als Produkte P-1 bis P-n mit niedrigeren Werten der Prioritätsdaten.

Gleichermaßen können die Prioritätsdaten auch von der Suchmaschine 8 berücksichtigt werden. Auf eine Suchanfrage führt diese eine Relevanzbewertung zu der Relevanz eines Produkts P-1 bis P-n für die Suchanfrage durch. Die Trefferliste zu der Suchanfrage wird dann in Abhängigkeit von dieser Relevanzbewertung sowie zusätzlich in Abhängigkeit von den Prioritätsdaten erzeugt.

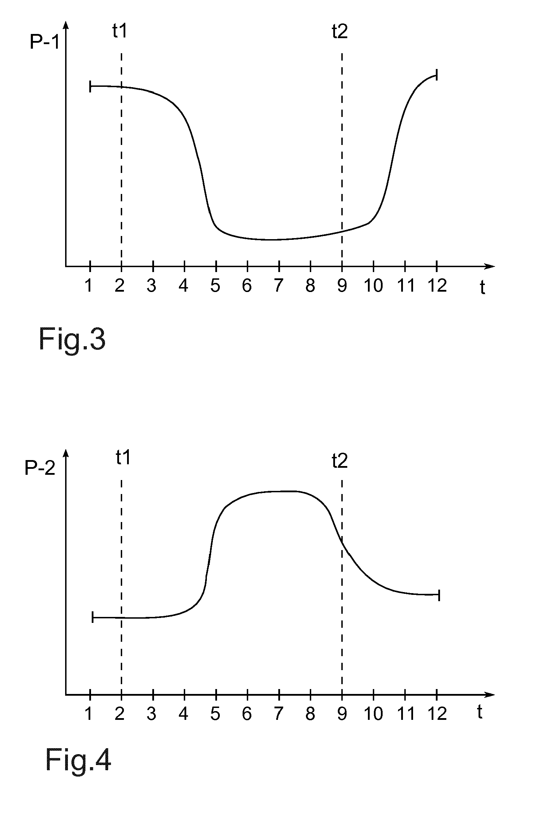

In den Figuren 3 und 4 ist ein Beispiel für die Entwicklung der absoluten Häufigkeit des Kaufs eines Produkts P-1 (Figur 3) und eines Produkts P-2 (Figur 4) während eines Jahres gezeigt. Die auf der Abszissenachse dargestellten Zahlen bezeichnen die Monate eines Jahres. Bei dem Produkt P-1 handelt es sich beispielsweise um einen Winterartikel, zum Beispiel um eine Daunenjacke, bei dem Produkt P-2 handelt es sich um einen Sommerartikel wie beispielsweise einen Badeanzug. Es ergibt sich, dass das Produkt P-1 besonders häufig in den Wintermonaten von anderen Nutzern N-2 bis N-m gekauft worden ist. Das Produkt P-2 ist hingegen besonders häufig in den Sommermonaten gekauft worden.

Im Folgenden wird erläutert, wie sich diese Verkaufszahlen der Produkte P-1 und P-2 auf die Prioritätsdaten dieser Produkte P-1 und P-2 für zwei aufeinanderfolgende Aufrufe der Webseite, welche diese Produkte anbietet, durch den Nutzer N-1 auswirkt:

Der Nutzer N-1 ruft beispielsweise die Webseite zum Zeitpunkt t1 im Februar auf und führt eine Suche nach verschiedenen Produkten durch. Er legt die Produkte P-1 und P-2 in seinen Warenkorb, kauft diese Produkte P-1 und P-2 jedoch nicht und verlässt die Webseite wieder. In der Datenbank 7 wird gespeichert, dass dieser Nutzer N-1 die Produkte P-1 und P-2 zum Zeitpunkt t1 in den Warenkorb gelegt hat. Entsprechend wird der Wert der Prioritätsdaten dieser Produkte P-1 und P-2 für diesen Nutzer N-1 auf einen bestimmten Wert gesetzt.

Zum Zeitpunkt t2 im September ruft der Nutzer N-1 erneut die Webseite auf. Bei der Veränderung der Prioritätsdaten wird in diesem Fall ein Teilzeitintervall der letzten drei Monate, d.h. des Zeitraums zwischen Juli und September betrachtet. In diesem Zeitraum wurde das Produkt P-1 von anderen Nutzern N-2 bis N-m eher selten gekauft, das Produkt P-2 hingegen häufiger. Entsprechend wird der Wert der Prioritätsdaten für das Produkt P-2 stärker erhöht als der Wert der Prioritätsdaten für das Produkt P-1. Entsprechend werden Informationen zu dem Produkt P-2 auf der Startseite der Webseite bei dem erneuten Aufruf von dem Nutzer N-1 hervorgehoben oder höherrangig in einer Liste mit Produktinformationen angezeigt als die Informationen zu dem Produkt P-1. Auch bei einer anschließenden Suche des Nutzers N-1 werden Produkte mit höheren Werten für die Prioritätsdaten als relevanter beurteilt als Produkte mit niedrigeren Werten der Prioritätsdaten. Auf diese Weise wird berücksichtigt, dass der Nutzer N-1 bei dem erneuten Aufruf der Webseite im September wahrscheinlich nicht mehr so interessiert an dem Produkt P-1 ist, bei dem es sich ja um einen Winterartikel handelt. Diese Bewertung wurde jedoch ohne die zuvor gespeicherte Information darüber ermittelt, dass es sich bei dem Produkt P-1 um einen Winterartikel handelt. Auf diese Weise können zeitliche Schwankungen der Relevanz eines Produkts anhand des Nutzerverhaltens anderer Nutzer erfasst werden, ohne dass diese Informationen im Voraus bekannt sind.

In einem weiteren Ausführungsbeispiel werden durch die in den Figuren 3 und 4 dargestellten Interaktionen für die Produkte P-1 und P-2 auch die Prioritätsdaten zu anderen Produkte verändert. Beispielsweise sei das Produkt P-1 eine Daunenjacke, so kann das System etwa anhand der Produktkategorie eine größere Ähnlichkeit zu Wintermänteln als zu leichten Sommerjacken feststellen. Wird das Produkt P-1 häufig gekauft, so kann mit der steigenden Relevanz von P-1 auch die Relevanz von Wintermänteln steigen, während die weniger ähnlichen leichten Sommerjacken davon unberührt bleiben.

In weiteren Ausführungsbeispielen können die Prioritätsdaten auch für andere Personalisierungsanwendungen genutzt werden. Zu solchen Anwendungen zählen beispielsweise Empfehlungsverfahren für Produkte P-1 bis P-n oder Verfahren zum Auswählen von Produkten P-1 bis P-n, die in einer individualisierten Mitteilung, zum Beispiel einem E-Mailwerbebrief, angeboten werden. Bei diesen Ausführungsbeispielen werden nicht Daten zu Produkten P-1 bis P-n gespeichert, zu denen Informationen bei einem Aufruf der Webseite durch den Clientcomputer 3-1 oder von dem Nutzer N-1 ausgegeben worden sind, sondern zu denen Informationen bei einem Clientcomputer 3-1 oder an einen Nutzer N-1 ausgegeben worden sind. Die Ausgabe kann in diesem Fall auch auf andere Weise, beispielsweise über eine E-Mail, eine Werbesendung oder dergleichen erfolgen.

### Bezugszeichenliste

- 1: Server
- 2: Internet
- 3-1: Nutzergerät; Clientcomputer
- 3-2 bis 3-m: andere Nutzergeräte; andere Clientcomputer
- 5: Steuereinheit
- 6: Grafikeinheit
- 7: Datenbank
- 8: Suchmaschine
- 9: Erfassungseinheit
- 10: bidirektionale Schnittstelle
- N-1: Definierter Nutzer
- N-2 bis N-m: andere Nutzer
- t1, t2: Zeitpunkte

## Patentansprüche

1. Verfahren zum Erzeugen von Prioritätsdaten für Produkte (P-1 bis P-n), zu denen Informationen ausgebbar sind, bei dem
- zu einem ersten Zeitpunkt (t1) Daten zu zumindest einem Produkt (P-1 bis P-n) gespeichert werden, mit dem ein definierter Nutzer (N-1) oder ein definiertes Nutzergerät (3-1) interagiert hat,
- zumindest einer Teilmenge der Produkte (P-1 bis P-n) in Abhängigkeit von den gespeicherten Daten Prioritätsdaten für eine Ausgabe von Informationen an den definierten Nutzer (N-1) oder an das definierte Nutzergerät (3-1) zu den Produkten (P-1 bis P-n) zugeordnet werden,
- zu einem zweiten Zeitpunkt (t2) eine Anfrage für eine Ausgabe von Informationen zu den Produkten (P-1 bis P-n) durch den definierten Nutzer (N-1) oder das definierte Nutzergerät (3-1) erfasst wird und
- die Ausgabe von Informationen zu den Produkten (P-1 bis P-n) auf die Anfrage in Abhängigkeit von den gespeicherten Prioritätsdaten erfolgt,
**dadurch gekennzeichnet, dass**
- zumindest in einem Teilzeitintervall zwischen dem ersten (t1) und zweiten Zeitpunkt (t2) Merkmale von Produktinteraktionen erfasst werden, die bei einer Interaktion durch einen anderen Nutzer (N-2 bis N-m) oder ein anderes Nutzergerät (3-2 bis 3-m) des anderen Nutzers (N-2 bis N-m) mit den Produkten (P-1 bis P-n) der ersten Teilmenge der Produkte (P-1 bis P-n) generiert wurden, und
- die gespeicherten Prioritätsdaten der ersten Teilmenge der Produkte (P-1 bis P-n) in Abhängigkeit von den jeweiligen erfassten Merkmalen der Produktinteraktionen verändert werden.

2. Verfahren nach Anspruch 1, **dadurch gekennzeichnet, dass**
- ferner für das zumindest eine Produkt (P-1) ein Ähnlichkeitsmaß zu den Produkten (P-1 bis P-n) bestimmt wird und
- die Prioritätsdaten der ersten Teilmenge der Produkte (P-1 bis P-n) ferner in Abhängigkeit vom Ähnlichkeitsmaß der Produkte (P-1 bis P-n), mit denen ein Nutzer (N-1 bis N-m) oder ein Nutzergerät (3-1 bis 3-m) interagiert hat, erzeugt oder verändert werden.

3. Verfahren nach einem der vorhergehenden Ansprüche, **dadurch gekennzeichnet, dass**
- zu dem ersten Zeitpunkt (t1) Daten zu Produkten (P-1 bis P-n) gespeichert werden, zu denen bei der Interaktion Informationen bei einem Aufruf einer Webseite durch einen Clientcomputer (3-1) des definierten Nutzers (N-1) oder von dem definierten Nutzer (N-1) ausgegeben worden sind,
- der ersten Teilmenge der Produkte (P-1 bis P-n) in Abhängigkeit von den gespeicherten Daten die Prioritätsdaten für einen erneuten Aufruf der Webseite durch diesen Clientcomputer (3-1) oder von diesem Nutzer (N-1) zugeordnet werden,
- zu dem zweiten Zeitpunkt (t2) die Anfrage für die Informationsausgabe ein erneuter Aufruf der Webseite durch diesen Clientcomputer (3-1) oder von diesem Nutzer (N-1) ist,
- die Ausgabe von Informationen zu den Produkten (P-1 bis P-n) bei dem erneuten Aufruf der Webseite in Abhängigkeit von den gespeicherten Prioritätsdaten erfolgt und
- der erste Zeitpunkt (t1) der Aufruf und der zweite Zeitpunkt (t2) der erneute Aufruf der Webseite durch den Clientcomputer (3-1) oder von dem definierten Nutzer (N-1) ist.

4. Verfahren nach einem der vorhergehenden Ansprüche, **dadurch gekennzeichnet, dass** bei den Produktinteraktionen eine räumliche Nähe zwischen den Produkten (P-1 bis P-n) und dem Nutzer (N-1 bis N-m) und/oder dem Nutzergerät (3 bis 3-m) erfasst wird.

5. Verfahren nach einem der vorhergehenden Ansprüche, **dadurch gekennzeichnet, dass** bei den Produktinteraktionen Signale zwischen den Produkten (P-1 bis P-n) und dem Nutzergerät (3-1 bis 3-m) mittels zumindest eines Transponders übertragen werden.

6. Verfahren nach einem der vorhergehenden Ansprüche, **dadurch gekennzeichnet, dass** zusätzlich zum Erfassen des Merkmals der Produktinteraktion zu einem Produkt (P-1 bis P-n) der Zeitpunkt des Generierens des Merkmals der Produktinteraktion gespeichert wird und die Veränderung der gespeicherten Prioritätsdaten der Produkte (P-1 bis P-n) ferner von dem Zeitpunkt des Generierens des jeweiligen Merkmals der Produktinteraktion abhängt.

7. Verfahren nach einem der vorhergehenden Ansprüche, **dadurch gekennzeichnet, dass** die Merkmale der Produktinteraktionen zu den Produkten (P-1 bis P-n) die Häufigkeit der Interaktion mit diesen Produkten (P-1 bis P-n) durch den anderen Nutzer (N-2 bis N-m) oder das andere Nutzergerät (3-2 bis 3-m) umfassen.

8. Verfahren nach einem der vorhergehenden Ansprüche, **dadurch gekennzeichnet, dass** die Merkmale der Produktinteraktionen zu den Produkten (P-1 bis P-n) die Häufigkeit eines Kaufvorgangs dieser Produkte (P-1 bis P-n) bei Interaktionen durch den anderen Nutzer (N-2 bis N-m) oder das andere Nutzergerät (3-2 bis 3-m) umfassen.

9. Verfahren nach einem der vorhergehenden Ansprüche, **dadurch gekennzeichnet, dass** die Rangfolge der Ausgabe von Informationen zu den Produkten (P-1 bis P-n) unmittelbar nach der Anfrage für eine Ausgabe von Informationen durch den definierten Nutzer (N-1) oder das definierte Nutzergerät (3-1) von den gespeicherten Prioritätsdaten für die Produkte (P-1 bis P-n) abhängt.

10. Verfahren nach einem der vorhergehenden Ansprüche, **dadurch gekennzeichnet, dass**
- eine Suchanfrage zur Suche nach Produkten (P-1 bis P-n) empfangen wird,
- für die zu den Produkten (P-1 bis P-n) gespeicherten Produktdaten eine Relevanzbewertung zu der Relevanz des jeweiligen Produkts (P-1 bis P-n) für die Suchanfrage durchgeführt wird und
- für die Ausgabe der Informationen zu zumindest einer zweiten Teilmenge der Produkte (P-1 bis P-n) eine Trefferliste für die Produkte (P-1 bis P-n) erzeugt wird, bei der
- die Rangfolge der Produkte (P-1 bis P-n) von der Relevanzbewertung und von den Prioritätsdaten abhängt.

11. Verfahren zum Betreiben einer Webseite für den E-Commerce, bei dem
- eine Interaktion mit zumindest einem Produkt (P-1 bis P-n) durch einen definierten Nutzer (N-1) oder ein definiertes Nutzergerät (3-1) des Nutzers (N-1) erfasst wird,
- Daten zu dem Produkt (P-1 bis P-n) gespeichert werden, mit dem eine Interaktion erfasst worden ist,
- zu zumindest einer ersten Teilmenge der Produkte (P-1 bis P-n) Prioritätsdaten gemäß dem Verfahren nach einem der Ansprüche 1 bis 11 erzeugt werden,
- ein Aufruf der Webseite durch diesen Nutzer (N-1) oder dieses Nutzergerät (3-1) erfasst wird und
- Informationen zu den Produkten (P-1 bis P-n) in Abhängigkeit von den gespeicherten Prioritätsdaten ausgegeben werden.

12. Verfahren nach Anspruch 11, **dadurch gekennzeichnet, dass** die Interaktion mit dem zumindest einen Produkt (P-1 bis P-n) ein Aufruf der Webseite ist, bei dem Informationen zu dem Produkt (P-1 bis P-n) ausgegeben werden.

13. Verfahren nach einem der Ansprüche 11 und 12, **dadurch gekennzeichnet, dass** bei dem Aufruf der Webseite eine Clientcomputer-Identifikation übertragen wird und anhand der übertragenen Clientcomputer-Identifikation bestimmt wird, ob die Webseite von dem Clientcomputer (3-1) oder einem anderen Clientcomputer (3-2 bis 3-m) aufgerufen wurde.

14. Verfahren nach einem der Ansprüche 11 bis 13 **dadurch gekennzeichnet, dass** bei dem Aufruf der Webseite eine Nutzeridentifikation durchgeführt wird und anhand der Nutzeridentifikation bestimmt wird, ob die Webseite von dem Nutzer (N-1) oder einem anderen Nutzer (N-2 bis N-m) aufgerufen wurde.

15. Computerprogrammprodukt mit Programmcode zur Durchführung des Verfahrens gemäß einem der Ansprüche 1 bis 14, wenn der Programmcode von einem Computer ausgeführt wird.
